# EUROPEAN PATENT SPECIFICATION

(11) **EP 3 116 098 B1**
(45) Date of publication and mention of the grant of the patent: **11.04.2018**
(21) Application number: 16178060.6
(22) Date of filing: 05.07.2016
(51) Int. Cl.: H02J 50/10, H02J 50/12, G06K 7/10, H02J 50/90, G06Q 20/20

(54) **WIRELESS POWER SUPPLY SYSTEM AND WIRELESS POWER SUPPLY DEVICE**
SYSTEM ZUR DRAHTLOSEN STROMVERSORGUNG UND VERFAHREN ZUR DRAHTLOSEN STROMVERSORGUNG
SYSTÈME D'ALIMENTATION SANS FIL ET DISPOSITIF D'ALIMENTATION EN ÉNERGIE SANS FIL

(30) Priority: 06.07.2015 JP 2015135457
(43) Date of publication of application: 11.01.2017
(73) Proprietor: Toshiba TEC Kabushiki Kaisha, Tokyo 141-0032 (JP)
(72) Inventor: MATSUNO, Hirokazu, Shinagawa-ku, Tokyo 141-8562 (JP)
(74) Representative: Takeuchi, Maya

(56) References cited:
- US-A1- 2011 018 498
- US-A1- 2015 144 701

## Description

### FIELD

Embodiments described herein relate generally to a wireless power supply system and a wireless power supply device.

### BACKGROUND

A POS system in which external wirings between a POS main body and peripheral devices is removed to realize all the communications in a wireless manner is being developed. However, recently, without impairing the advantage of the wireless, attempt is made that a power cable of each device is also removed to carry out a power supply of each device by wireless. Such a system is disclosed in US 2015/144701 A1. The supplying of power to each device by wireless is carried out by a power supply device. For example, in an electromagnetic induction type power supply device, density of line of magnetic force occurring in the power supply device changes, and an induced electromotive force caused by mutual induction occurs in each device. However, as the transmission of the electric power is carried out via an electromagnetic wave in the foregoing power supply system, the power loss of the transmission thereby is higher than that occurring in a wired transmission. For example, there is a case in which more than 30 percent of the electric power transmitted by the power supply device is lost. Thus, in the case of adopting the wireless power supply, it is necessary to suppress the loss of the electric power transmitted via the electromagnetic wave as far as possible in view of an energy saving. US 2011/018498 A1 discloses a system for wirelessly recharging a soldier's electronic equipment during transportation. A transmitter coil in a seat back is only activated when a hall-effect proximity detector indicates that the soldier is sitting in the seat.

### DESCRIPTION OF THE DRAWINGS

Fig. 1 is a perspective diagram illustrating the appearance of a wireless POS system shown as an example according to an embodiment;
Fig. 2 is a block diagram illustrating the hardware of a power supply stand;
Fig. 3 is a block diagram illustrating the hardware of a POS terminal;
Fig. 4 is a block diagram illustrating the hardware of a printer;
Fig. 5 is a block diagram illustrating the hardware of a handy scanner;
Fig. 6 is a diagram illustrating an example of the arrangement structure of each section of the whole wireless POS system;
Fig. 7 is a flowchart illustrating an example of the operations of the power supply stand;
Fig. 8 is a flowchart illustrating an example of the operations of the POS terminal;
Fig. 9 is a flowchart illustrating an example of the operations of the printer; and
Fig. 10 is a flowchart illustrating an example of the operations of the handy scanner.

### DETAILED DESCRIPTION

In accordance with an embodiment, a wireless power supply system comprises a power supply section, a detection section and a power supply control section. The power supply section carries out a wireless power supply to an electronic device. The detection section detects an operator who operates the electronic device. The power supply control section starts the wireless power supply to the electronic device by the power supply section if the operator is detected by the detection section or stops the wireless power supply to the electronic device by the power supply section if the operator is not detected by the detection section.

The wireless power supply system may further comprise a device detection section configured to detect that the electronic device is moved from a power supply area for receiving the wireless power supply to the outside of the power supply area. According to the present invention, the electronic device charges a built-in battery through the wireless power supply in a state of a power-off or an energy saving mode until the device detection section detects that the electronic device is moved to the outside of the power supply area.

Preferably, the power supply control section stops, if the device detection section detects that the electronic device is moved to the outside of the power supply area, the wireless power supply from the power supply section to the electronic device whose movement to the outside of the power supply area is detected.

The present invention also relates to a wireless power supply device, comprising a power supply section configured to carry out a wireless power supply to an electronic device; a detection section configured to detect an operator who operates the electronic device; a power supply control section configured to start the wireless power supply to the electronic device by the power supply section if the operator is detected by the detection section or stop the wireless power supply to the electronic device by the power supply section if the operator is not detected by the detection section; and a housing, in which the power supply section is arranged, configured to receive the electronic device to carry out the wireless power supply to the electronic device by the power supply section.

Preferably, the wireless power supply device, further comprises a device detection section configured to detect that the electronic device is moved to the inside or outside of a power supply area serving as an area for enabling the electronic device to receive the wireless power supply, wherein the power supply control section stops, if the device detection section detects that the electronic device is moved to the outside of the power supply area, the wireless power supply to the electronic device until the device detection section detects that the electronic device is moved to the inside of the power supply area.

The present invention also relates to a ponint of sale system comprising a point of sales main body , an electronic device and a wireless power supply system or the wireless power supply device according to any one of claims 1 to 5.

Preferably, the electronic device further comprises a built-in battery, a use-state detection section for detecting a use state of the electronic devise by the operator and a power control section for controlling power supply from the built-in battery to the electronic device,

According to the present invention, the use-state detection section is configured to output a signal for instructing the activation of the electronic device to the power control section if an output value from the detecting section is greater than a specific threshold value.

Preferably, the power control section is configured to control power supply from the built-in battery to the electronic device to enable a wireless communication with the point of sales main body.

Embodiments of a wireless power supply system and a wireless power supply device are described, as non-limiting examples, below in detail with reference to the accompanying drawings. It is exemplified to apply the wireless power supply system of the embodiment to a wireless POS (Point of Sales) system.

### (Embodiment)

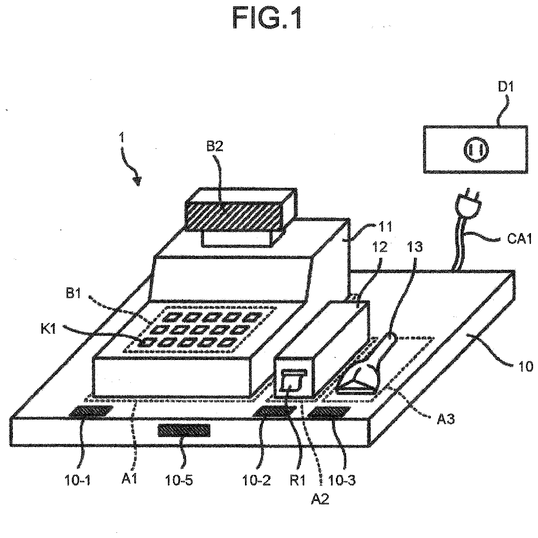

Fig. 1 is a perspective diagram illustrating the appearance of the wireless POS system shown as an example according to an embodiment. The wireless POS system 1 shown in Fig. 1 includes a power supply stand 10 and various electronic devices placed on the power supply stand 10. A POS terminal (main body) 11 and a printer 12 and a handy scanner 13 serving as peripheral devices thereof are illustrated as an example of the electronic devices .

The power supply stand 10 is an example of the wireless power supply device for supplying power to various electronic devices by wireless. The power supply stand 10, which is arranged on a checkout table, receives the power supply from an AC (Alternating Current) power supply D1 via a power cable CA1.

The power supply stand 10 includes, on the upper surface of a housing, placement areas A1, A2 and A3 for placing each electronic device. In the present embodiment, areas (power supply areas) where each electronic device receives power supplied by wireless from the power supply stand 10 are set as the placement areas A1, A2 and A3. For example, a center mark or a hollow (dent) is formed in each placement area (A1, A2 and A3) so that it enables to determine the relative position of each electronic device in each placement area at the time a user places an electronic device in one of the placement areas. The power supply stand 10 further includes, in the vicinity of the placement areas A1, A2 and A3 of electronic devices on the upper surface of the housing, LEDs (Light Emitting Diode) 10-1, 10-2 and 10-3 that emit light to notify an operator that a power supply section inside the housing is in operation. Further, although not shown in the figures, device detection sensors for detecting whether or not electronic devices are placed in the placement areas A2 and A3 in which the printer 12 and the handy scanner 13 are respectively placed are respectively arranged. In other words, it is detected through the device detection sensor that each electronic device is located at the corresponding power supply area. A human sensor 10-5 for detecting that the operator is located at an operation area is arranged in front of the power supply stand 10.

The power supply stand 10 includes a power supply section for supplying power to the electronic device in a wireless manner and a power supply control section for controlling the start and the stop of the wireless power supply therein. In the present embodiment, the power supply section carries out a power supply with an electromagnetic induction method. Further, a power supply method is not limited to the electromagnetic induction method. In addition to the electromagnetic induction method, other power supply methods such as an electromagnetic field resonance method, a radio reception method and the like may be adopted. The internal structure of the power supply stand 10 containing the power supply section and the power supply control section is described later in detail.

The POS terminal 11 is a POS main body device for carrying out a commodity transaction processing with a customer. A POS main body device on which a keyboard B1 and a display section B2 are integrally constituted is exemplified.

Various keys k1 including a commodity key, a checkout key, a closing key, etc. , are arranged on the keyboard B1. The display section B2 includes an LED display panel or a liquid crystal display for displaying a checkout amount calculated by the POS terminal 11.

The POS terminal 11 includes a mother board therein, and the mother board is electrically connected with the keyboard B1 and the display section B2. A wireless communication section for carrying out a wireless communication with a peripheral device is arranged on the mother board. With this arrangement, the POS terminal 11 carries out the wireless communication with the peripheral device suitably to execute the commodity transaction processing and the like. Furthermore, the POS terminal 11 includes therein a power receiving section for taking out electric power transmitted wirelessly from the power supply stand 10. The power receiving section generates an induced electromotive force with a mutual induction if receiving the electromagnetic induction action from the power supply stand 10. In this way, the POS terminal 11 takes out the electric power transmitted wirelessly from the power supply stand 10 by the power receiving section and uses the electric power to drive each section of the POS terminal 11.

The printer 12 is used to print a print data indicating a transaction content from the POS terminal 11 on a receipt R1 through a thermal transfer action. The printer 12 includes a wireless communication section for carrying out a wireless communication with the POS terminal 11 to receive the print data from the POS terminal 11 through the wireless communication.

The handy scanner 13 is a handheld type scanner used to read a commodity barcode. The handy scanner 13 includes a wireless communication section for carrying out a wireless communication with the POS terminal 11 to send barcode information read by the handy scanner 13 to the POS terminal 11 through the wireless communication.

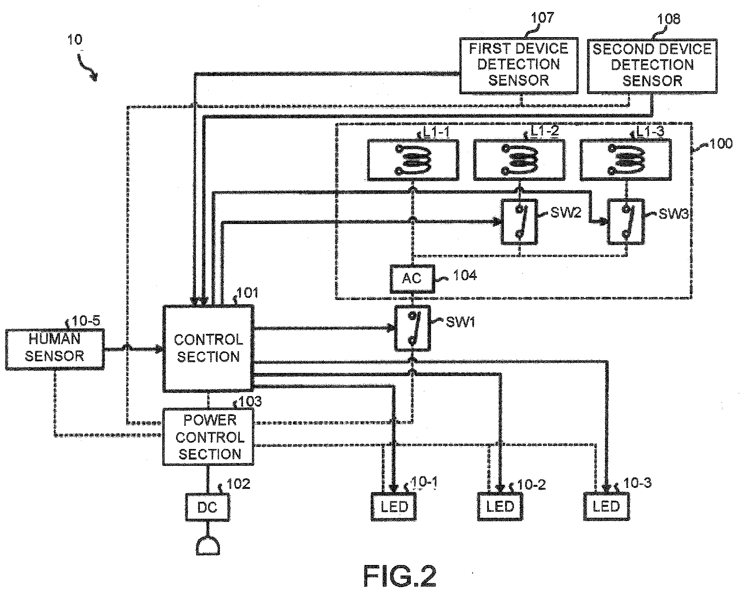

Fig. 2 is a block diagram illustrating the hardware of the power supply stand 10.

The power supply stand 10 shown in Fig. 2, serving as a power transmission section, comprises a power supply coil section 100, a DC section 102, a power control section 103, an AC section 104 and changeover switches SW1, SW2, and SW3. Further, the power supply stand 10, serving as a control section for executing a series of control relating to the switching of the changeover switches SW1∼SW3, comprises a control section 101, a human sensor 10-5, an LED 10-1, an LED 10-2, an LED 10-3, a first device detection sensor 107 and a second device detection sensor 108.

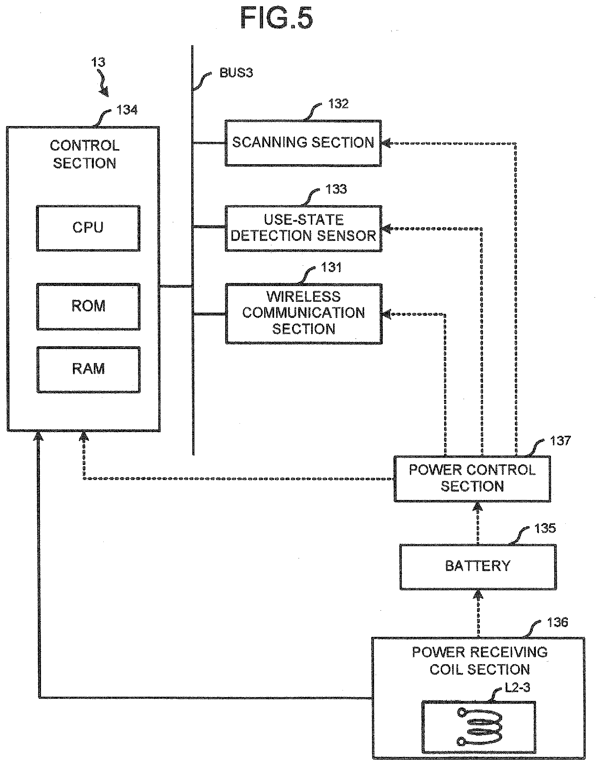

Among the above-mentioned sections, the power supply coil section 100 mainly corresponds to the foregoing "power supply section". The control section 101 and the changeover switches SW1∼SW3 mainly correspond to the foregoing "power supply control section". The human sensor 10-5 mainly corresponds to the "detection section". The first device detection sensor 107 and the second device detection sensor 108 mainly correspond to the "device detection section". A use-state detection sensor 133 (refer to Fig. 5) described later included in the handy scanner 13 mainly corresponds to the "device detection section" as well.

The DC section 102 is an AC (Alternating Current) /DC (Direct Current) conversion circuit which converts an alternating current power from the AC power supply D1 (refer to Fig. 1) to a direct current power to supply the direct current power to the power control section 103.

The power control section 103 is a circuit for supplying the direct current power transmitted from the DC section 102 to each section of the control section 101, the AC section 104, the human sensor 10-5, the LED 10-1∼LED 10-3, the first device detection sensor 107 and the second device detection sensor 108 as a driving power. The power control section 103, at the time of supplying power to each section, carries out an adjustment such as decreasing a voltage to an individual corresponding voltage.

The AC section 104 is a DC/AC conversion circuit which converts the direct current power from the power control section 103 to the alternating current power to supply the alternating current power to the power supply coil section 100.

The power supply coil section 100 is a circuit including a primary coil L1 formed by winding metal wire such as copper. In the power supply coil section 100, if an alternating current voltage of the AC section 104 is applied, the alternating current flows to the primary coil L1, and a direction and the magnetic flux density of the line of the magnetic force penetrating the primary coil L1 change with time. With this change, in an electronic device arranged at a position facing the primary coil L1, a direction and magnetic flux density of line of the magnetic force penetrating a secondary coil included in an internal power receiving section change with time, and the induced electromotive force occurs with a mutual induction.

In the present embodiment, the power supply stand 10 supplies power to three electronic devices. Thus, the power supply coil section 100 comprises three primary coils L1-1, L1-2 and L1-3. The primary coils L1-1, L1-2 and L1-3 are connected with one another in parallel, and the same alternating current voltage from the AC section 104 is applied between both terminals of each of the primary coils L1-1, L1-2 and L1-3. Thus, the same alternating current flows in the primary coils L1-1, L1-2 and L1-3 respectively to exhibit the same power supply ability together. The power supply ability of each of the primary coils L1-1, L1-2 and L1-3 may be different depending on the electronic devices serving as power supply targets.

In the present embodiment, the changeover switch SW1 for cutting off a power transmission line from the power control section 103 to the AC section 104 is arranged between the power control section 103 and the AC section 104. Furthermore, the changeover switches SW2 and SW3 for turning off the current are arranged respectively in series corresponding to the primary coils L1-2 and L1-3 in the primary coil L1. The changeover switches SW1∼SW3 are switching devices such as MOSFET (Metal-Oxide-Semiconductor Filed-Effect Transistor), a photo-switch and the like.

The human sensor 10-5, which is an infrared sensor or an ultrasonic sensor, is used to detect a person who is located in a specific range. In the present embodiment, the human sensor 10-5 is the infrared sensor. In this case, for example, the infrared sensor emits infrared light to the specific range, and senses reflected light thereof to output an electrical signal corresponding to the reflected light. The human sensor 10-5 detects that a person is located in the specific range, and outputs a detection signal (for example, a HIGH-level signal) to the control section 101 in a case in which a signal level of the output electrical signal of the infrared sensor is greater than a specific threshold value.

The LED 10-1, the LED 10-2 and the LED 10-3 are devices each of which enables an LED to emit light according to an "ON" signal (for example, hereinafter referred to as a HIGH-level signal) from the control section 101.

The first device detection sensor 107 and the second device detection sensor 108, which are an infrared sensor, an ultrasonic sensor, a pressure sensor or a micro switch, detect the electronic devices respectively placed on the power supply stand 10. The first device detection sensor 107 and the second device detection sensor 108, for example, in the case of the infrared sensor, if an output level of the infrared sensor is greater than a specific threshold value, detect that the electronic devices are placed on the power supply stand 10 and output a detection signal (for example, a HIGH-level signal) to the control section 101. Further, in the case of a contact type sensor such as the micro switch, a switch is pressed through the contact while the electronic device is placed on the power supply stand 10. Thus, for the period of the contact, the first device detection sensor 107 and the second device detection sensor 108 output a detection signal (for example, a HIGH-level signal) to the control section 101.

The control section 101 controls each section of the power supply stand 10 in response to the signals output from various sensors. The control section 101 also includes a timer serving as a clocking section for counting time to use the timer for the control of each section of the power supply stand 10.

Firstly, the control section 101 outputs an "OFF" signal (for example, hereinafter referred to as a LOW-level signal) to the changeover switch SW1 in a case in which a signal (for example, a LOW-level signal) indicating that a person is not detected is input from the human sensor 10-5. With the input of the signal, the changeover switch SW1 is opened, and then the power transmission line to the AC section 104 and the power supply coil section 100 is cut off.

Secondly, the control section 101 outputs the "ON" signal to the changeover switch SW1 in a case in which the detection signal (for example, the HIGH-level signal) is input from the human sensor 10-5. With the output of the "ON" signal, the changeover switch SW1 is closed, and the power transmission line to the AC section 104 and the power supply coil section 100 is connected.

Thirdly, the control section 101 outputs the "OFF" signal (for example, the LOW-level signal) to the changeover switch SW2 of the primary coil L1-2 in a case in which a signal indicating that a person is not detected is input from the first device detection sensor 107. With the output of the "OFF" signal, the changeover switch SW2 is opened.

Fourthly, the control section 101 outputs the "OFF" signal to the changeover switch SW3 of the primary coil L1-3 in a case in which a signal indicating that a person is not detected is input from the second device detection sensor 108. With the output of the "OFF" signal, the changeover switch SW3 is opened.

Fifthly, the control section 101 outputs the "ON" signal to the changeover switch SW2 of the primary coil L1-2 in a case in which a signal (for example, a HIGH-level signal) indicating that a person is detected is input from the first device detection sensor 107. With the output of the "ON" signal, the changeover switch SW2 is closed.

Sixthly, the control section 101 outputs the "ON" signal to the changeover switch SW3 of the primary coil L1-3 in a case in which a signal (for example, a HIGH-level signal) indicating that a person is detected is input from the second device detection sensor 108. With the output of the "ON" signal, the changeover switch SW3 is closed.

Seventhly, the control section 101 outputs the "ON" signal or the "OFF" signal to the LED 10-1, the LED 10-2 and the LED 10-3 according to the state of the changeover switches SW1∼SW3. With the output of either the "ON" signal or the "OFF" signal, the LED is turned on according to the "ON" signal or turned off according to the "OFF" signal.

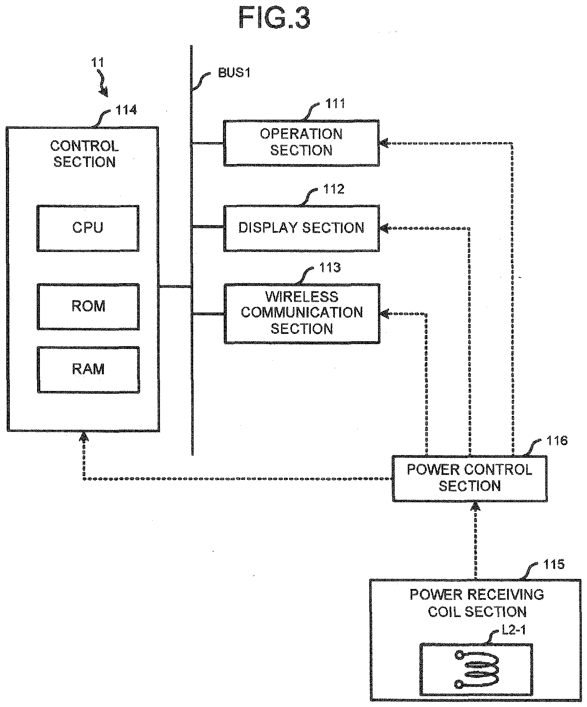

Fig. 3 is a block diagram illustrating the hardware of the POS terminal 11.

The POS terminal 11 shown in Fig. 3 comprises an operation section 111, a display section 112, a wireless communication section 113, and a control section 114 as an information processing section of the mother board. Each section is connected through a BUS line 1. Further, the POS terminal 11 includes a power receiving coil section 115 and a power control section 116 as a power transmission section.

The operation section 111, which is electrically connected with a keyboard, converts an input from the keyboard to a specific instruction code or data code to output the instruction code or data code to the control section 114.

The display section 112 is a circuit for displaying information designated by the control section 114 on an LED panel or a liquid crystal display panel.

The wireless communication section 113 is a circuit for carrying out a wireless communication with a peripheral device (in the present embodiment, the printer 12 and the handy scanner 13) . The wireless communication section 113 establishes or cuts off the wireless communication with the peripheral device. After the establishment of the wireless communication, for example, the wireless communication section 113 sends a print command and print data to the printer 12. Further, the wireless communication section 113 receives from the handy scanner 13 commodity code data read by the handy scanner 13. The communication system or method of the wireless communication section 113 is the Bluetooth (registered trademark), for example. A wireless LAN (Local Area Network) communication and an NFC (Near Field Communication) may also be applicable.

The control section 114 includes a computer composed of a CPU (Central Processing Unit), a ROM (Read Only Memory) and a RAM (Random Access Memory). If the driving power is supplied, the control section 114 carries out a commodity transaction processing in such a manner that the CPU executes a program of the commodity transaction processing stored in the ROM to control each section of the POS terminal 10. The control section 114 carries out the commodity transaction processing along with an input/output processing as follows on the basis of an input command from the operation section 111. For example, the control section 114 receives the commodity code data from the operation section 111 or the wireless communication section 113 in the commodity transaction processing, and accumulates commodity information corresponding to the commodity code data in the RAM as the transaction information. Further, each time the control section 114 receives the commodity code data, the control section 114 outputs the commodity information corresponding to the commodity code data to the display section 112 to display the commodity information on the LED display panel.

The power receiving coil section 115 includes a secondary coil L2-1 formed by winding the metal wire such as a copper. If the direction and the magnetic flux density of the line of magnetic force in the primary coil L1-1 of the power supply stand 10 change with time, a direction and magnetic flux density of the line of magnetic force penetrating the secondary coil L2-1 are changed with time and thus the power receiving coil section 115 generates the induced electromotive force. The power receiving coil section 115 further includes a rectifier circuit and a protection circuit. The power receiving coil section 115 converts the induced electromotive force occurring in the secondary coil L2-1 to the direct current power through the rectifier circuit. Further, the power receiving coil section 115 prevents an excess current and an excess voltage through the protection circuit to supply a stable direct current voltage to the power control section 116.

The power control section 116 supplies the direct current power supplied from the power receiving coil section 115 to each section of the POS terminal 11 as the driving power as shown by arrows in a dotted line of Fig. 3.

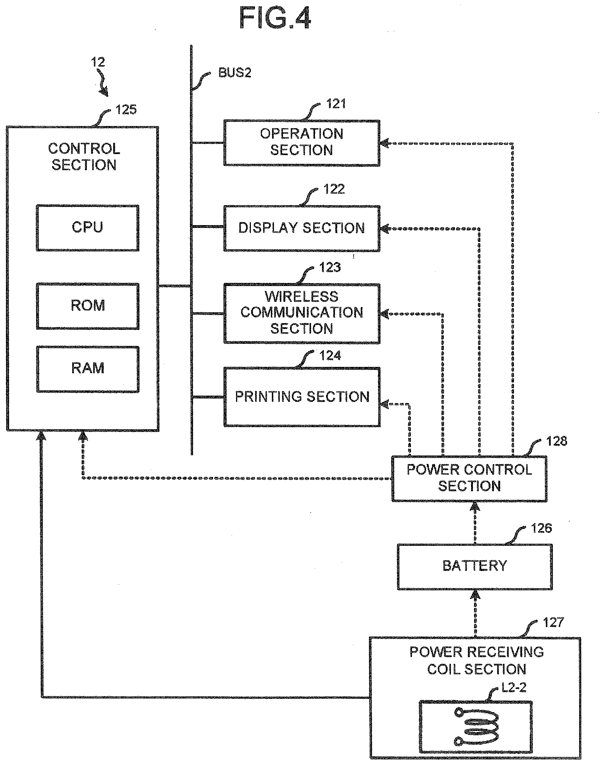

Fig. 4 is a block diagram illustrating the hardware of the printer 12.

The printer 12 shown in Fig. 4 comprises an operation section 121, a display section 122, a wireless communication section 123, a printing section 124 and a control section 125 as an information processing section. Each section is connected through a BUS line 2. Further, the printer 12 includes a battery 126, a power receiving coil section 127 and a power control section 128 as a power transmission section.

The operation section 121, which is electrically connected with an operation button, converts input from the operation button to a specific instruction code or data code to output the instruction code or data code to the control section 125.

The display section 122 is a circuit for displaying information designated by the control section 125 on an LED panel or a liquid crystal display panel.

The wireless communication section 123 is a circuit for carrying out a wireless communication with the POS terminal 11. The wireless communication section 123 establishes the wireless communication with the POS terminal 11 to receive, for example, the print command and the print data from the POS terminal 11. If receiving a command indicating a communication disconnection from the POS terminal 11, the wireless communication section 123 cuts off the wireless communication. The communication system or method of the wireless communication section 123 adopts the Bluetooth (registered trademark), for example. The wireless LAN communication and the NFC may also be applicable.

The printing section 124 includes a conveyance section that takes out a receipt paper having an enough size or length to be printed from a rolled receipt paper and discharges it outwards and a transfer section that transfers the print data on the receipt paper.

The control section 125 includes a computer composed of a CPU, a ROM and a RAM. The control section 125 carries out a printing processing in such a manner that the CPU executes a program of the printing processing stored in the ROM to control each section of the printer 12. The printing processing is carried out based on, for example, the print command received by the wireless communication section 123.

The power receiving coil section 127 includes a secondary coil L2-2 formed by winding the metal wire such as a copper. The power receiving coil section 127 generates the induced electromotive force in the secondary coil L2-2, similar to the power receiving coil section 115 of the POS terminal 11. The power receiving coil section 127 converts the current flowing through the secondary coil L2-2 with the induced electromotive force generated in the secondary coil L2-2 to a direct current by the rectifier circuit to charge the direct current power to the battery 126.

The battery 126 includes a secondary battery such as a nickel-metal hydride battery or a lithium-ion battery as a rechargeable battery that can repeat charge and discharge. Further, the battery 126 includes a circuit for storing the direct current power supplied from the rectifier circuit in the rechargeable battery. A circuit for supplying a direct current with a constant voltage and a protection circuit for preventing the excess current and the excess voltage are arranged in the circuit.

The power control section 128 controls the supply of the driving power from the battery 126 to each section of the printer 12. In the present embodiment, the power control section 128 monitors a voltage between both terminals of the secondary coil L2-2.

Specifically, in the power control section 128, a voltage indicating the occurrence of the induced electromotive force is applied between both terminals of the secondary coil L2-2. Thus, the power control section 128 connects a power transmission line to a processing section (for example, the control section 125 or the wireless communication section 123) that carries out a receiving processing of the print command sent from the POS terminal 11. In other words, the power control section 128 starts to supply power from the battery 126 to the processing section that carries out the receiving processing of the print command. In this way, the printer 12 activates the processing section that carries out the receiving processing of the print command sent from the POS terminal 11 while the induced electromotive force occurs.

Furthermore, the power control section 128 connects power transmission lines to the remaining sections of the printer 12 according to the reception of the print command to start the supply of the power from the battery 126. In this way, the printer 12 receives the print command as a trigger of the power supply to activate all the sections.

If the control section 125 terminates the execution of the printing processing, the power control section 128 stops the supply of the power to the foregoing remaining sections. In this way, the printer 12 stands by in an energy saving mode until a next print command is received.

In the energy saving mode, if the wireless communication section 123 receives a communication disconnection command from the POS terminal 11, the power control section 128 stops all the power supply according to an instruction of the control section 125. In other words, the power source of the printer 12 is turned off.

The energy saving mode refers to a mode of supplying power to the processing section relating to the wireless communication and stopping the supply of the power to other sections . However, the present embodiment is not limited to this . The energy saving mode may stop the supply of the power to a part of all the sections. In the following description, though not described in particular, the energy saving mode refers to a mode of stopping the supply of the power to a part of all the sections.

Fig. 5 is a block diagram illustrating the hardware of the handy scanner 13.

The handy scanner 13 shown in Fig. 5 includes a wireless communication section 131, a scanning section 132 and a control section 134 as an information processing section. Each section is connected through a BUS line 3. Further, the handy scanner 13 also includes a use-state detection sensor 133, a battery 135, a power receiving coil section 136 and a power control section 137 as a power transmission section.

The control section 134 includes a computer composed of a CPU, a ROM and a RAM. The control section 134 carries out a reading processing in such a manner that the CPU executes a program of the reading processing stored in the ROM to control each section. For example, the program stored in the ROM starts with the supply of the power and the control section 134 carries out the reading processing. In the reading processing, the control section 134 drives the scanning section 132 to read barcode information and decodes the barcode information read by the scanning section 132 to the commodity code data on the RAM. Furthermore, the control section 134 instructs the wireless communication section 131 to send the commodity code data. The control section 134, which also includes a timer serving as a clocking section, counts a stop time of the handy scanner 13.

The wireless communication section 131 is a circuit for carrying out a wireless communication with the POS terminal 11. The wireless communication section 131 establishes the wireless communication with the POS terminal 11 to send the commodity code data to the POS terminal 11. The communication system or a method of the wireless communication section 131 is Bluetooth (registered trademark), for example. The wireless LAN communication and the NFC may also be applicable.

The scanning section 132 includes an irradiation section for irradiating laser light and a reading section for reading reflected light with a line sensor such as a CCD (Charge-Coupled Device).

The use-state detection sensor 133 is a sensor device for detecting a use state of the handy scanner 13 by the operator. For example, the use-state detection sensor 133 is a detecting sensor such as an acceleration sensor, an angular velocity sensor, a temperature sensor, a pressure sensor and the like. The use-state detection sensor 133 outputs a signal for instructing the activation of the handy scanner 13 to the power control section 137 if an output value from the detecting sensor is greater than a specific threshold value.

For example, in a case in which the detecting sensor is the acceleration sensor or the angular velocity sensor, the use-state detection sensor 133 takes an output value of a specific range at the time the handy scanner 13 is at a standstill (not in use) as a reference value. If the operator takes the handy scanner 13 by hand, a value of the acceleration at the time the handy scanner 13 is lifted up or a value of the angular velocity at the time the handy scanner is inclined exceeds the range of the output value. The use-state detection sensor 133 detects that the value of the acceleration or the angular velocity is greater than the range of the output value, and thus outputs the signal for instructing the activation of the handy scanner 13 to the power control section 137.

In a case in which the detecting sensor is the temperature sensor, the use-state detection sensor 133 takes the temperature of a specific range of a grip section at the time the operator does not grasp the handy scanner 13 as a reference value. If the operator takes the handy scanner 13 by hand, temperature of the grip section of the handy scanner 13 is more than the range of the above-described temperature (reference value) . The use-state detection sensor 133 detects that a value of the temperature of the grip section of the handy scanner 13 is greater than the range of the temperature described above, and thus outputs the signal for instructing the activation of the handy scanner 13 to the power control section 137.

Further, in a case in which the detecting sensor is the pressure sensor, the use-state detection sensor 133 takes a pressure value of a specific range of a grip section at the time the operator does not grasp the handy scanner 13 as a reference value. If the operator takes the handy scanner 13 by hand, a pressure value of the grip section of the handy scanner 13 is greater than the range of the pressure value described above. The use-state detection sensor 133 detects that the pressure value of the grip section of the handy scanner 13 is greater than the range of the pressure value, and thus outputs the signal for instructing the activation of the handy scanner 13 to the power control section 137.

The power receiving coil section 136 includes a secondary coil L2-3 formed by winding the metal wire such as a copper. In the power receiving coil section 136, the induced electromotive force occurs in the secondary coil L2-3, similar to the power receiving coil section 115 of the POS terminal 11. The power receiving coil section 136 converts a current flowing through the secondary coil L2-3 with the induced electromotive force occurring in the secondary coil L2-3 to a direct current through the rectifier circuit to charge the direct current power to the battery 135.

The battery 135 includes a secondary battery such as a nickel-metal hydride battery or a lithium-ion battery as a rechargeable battery that can repeat charge and discharge. Furthermore, the battery 135 includes a circuit for storing the direct current power supplied from the rectifier circuit in the rechargeable battery. A circuit for supplying a direct current with a constant voltage and a protection circuit for preventing the excess current and the excess voltage are arranged in the circuit.

The power control section 137 controls the supply of the driving power from the battery 135 to each section of the handy scanner 13. In the present embodiment, the power control section 137 monitors a voltage between both terminals of the secondary coil L2-3.

Specifically, the voltage indicating the occurrence of the induced electromotive force is applied between both terminals of the secondary coil L2-3. Thus, the power control section 137 connects a power transmission line to the use-state detection sensor 133 to start the supply of the power to the battery 135. In this way, a function for detecting the use state of the handy scanner 13 is being activated for a period for which the induced electromotive force occurs.

Furthermore, the power control section 137 connects power transmission lines to all the sections of the handy scanner 13 if the signal for instructing the activation of the handy scanner 13 is input from the use-state detection sensor 133. In other words, the power control section 137 starts the supply of the power to each section of the handy scanner 13. In this way, the handy scanner 13 activates the whole sections thereof to connect with the POS terminal 11 wirelessly to start the reading processing.

The power control section 137 stops the supply of part of electric power in a case in which the signal for instructing the activation of the handy scanner 13 is not input for a certain time after the activation of the handy scanner 13. For example, except the use-state detection sensor 133 and the processing section (for example, the control section 134 and the wireless communication section 131) for carrying out communication with the POS terminal 11, the power supply to the remaining sections is stopped. In this way, the handy scanner 13 stands by in the energy saving mode until a next commodity code is read.

Further, in the energy saving mode, if the wireless communication section 131 receives the communication disconnection command from the POS terminal 11, the power control section 137 stops all the power supply according to an instruction from the control section 134. In other words, the power source of the handy scanner 13 is turned off.

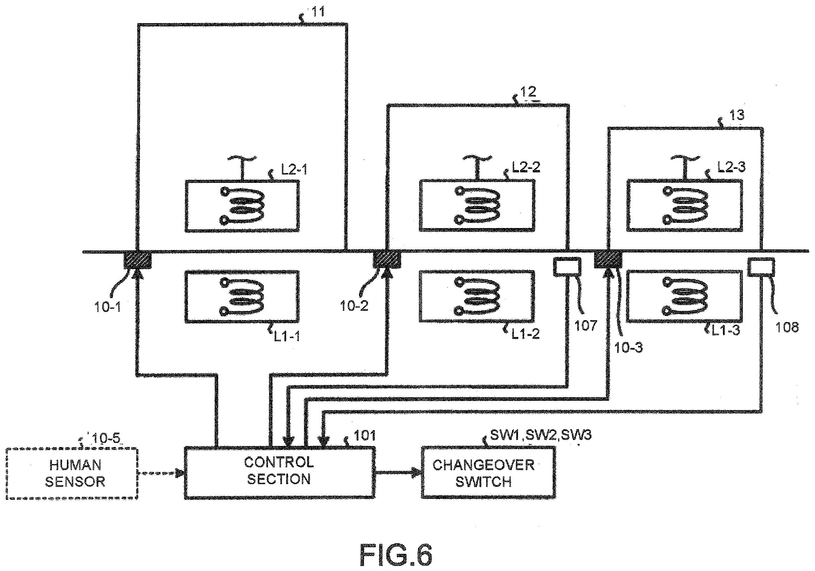

Fig. 6 is a diagram illustrating an example of the arrangement structure of each section of the whole wireless POS system. Fig. 6 shows the whole wireless POS system from the front direction.

Fig. 6 shows the arrangement structure of each section in a state in which the power supply stand 10 is arranged on the checkout table, and the electronic devices such as the POS terminal 11, the printer 12, and the handy scanner 13 are placed on the power supply stand 10. Hereinafter, a main arrangement structure is described.

In the power supply stand 10, the power supply coil section 100 inside the housing is arranged with three primary coils L1-1, L1-2 and L1-3, respectively corresponding to electronic devices, central axes of which are directed upwardly in Fig. 6.

The LED 10-1, the LED 10-2 and the LED 10-3 are respectively arranged at positions nearby the placement areas A1, A2 and A3 on the upper surface of the housing of the power supply stand 10, where the operator can recognize the light of the LED with eyes.

The human sensor 10-5 is arranged at a position at which the operator in the area for operating the POS terminal 11 or the handy scanner 13 is detected. For example, in a case in which the human sensor 10-5 is the infrared sensor or the ultrasonic sensor, the human sensor 10-5 is arranged at the front side of the housing of the power supply stand 10 (refer to Fig. 1).

The first device detection sensor 107 is arranged in the placement area A2 of the printer 12 in a manner of being buried inside the housing. The first device detection sensor 107 distinctively detects a state in which the printer 12 is being placed in the placement area A2 and a state in which the printer 12 is lifted up from the placement area A2, and outputs signals for distinguishing each state to the control section 101.

The second device detection sensor 108 is arranged in the placement area A3 of the handy scanner 13 in a manner of being buried inside the housing. The second device detection sensor 108 distinctively detects a state in which the handy scanner 13 is being placed in the placement area A3 and a state in which the handy scanner 13 is lifted up from the placement area A3, and outputs signals for distinguishing each state to the control section 101.

In the POS terminal 11, the printer 12 and the handy scanner 13, the power receiving coil section 115, the power receiving coil section 127 and the power receiving coil section 136 are arranged at the lower part respectively. The power receiving coil sections 115, 127 and 136 are respectively arranged such that central axes of the secondary coils L2-1, L2-2 and L2-3 thoseof are directed downwardly in Fig. 6. In the present embodiment, the POS terminal 11, the printer 12 and the handy scanner 13 respectively acquire or receive the electric power transmitted wirelessly by the power supply stand 10 with maximum efficiency.

Next, operation flows of the whole wireless POS system are described.

In the wireless POS system 1 (refer to Fig. 6) of the present embodiment, the operator operates the POS terminal 11 in a state in which it is placed on the power supply stand 10. The printer 12 and the handy scanner 13 are respectively loaded with a battery for drive. Thus, the printer 12 and the handy scanner 13 can be used at any location other than on the power supply stand 10 as long as the battery is in the charged state.

Hereinafter, an operation flow of a case in which the POS terminal 11, the printer 12 and the handy scanner 13 are respectively placed on the placement areas A1, A2 and A3 on the power supply stand 10 in advance is described as an example. In the following description, the electric power is supplied from the AC power supply D1 (refer to Fig. 1) to the power supply stand 10.

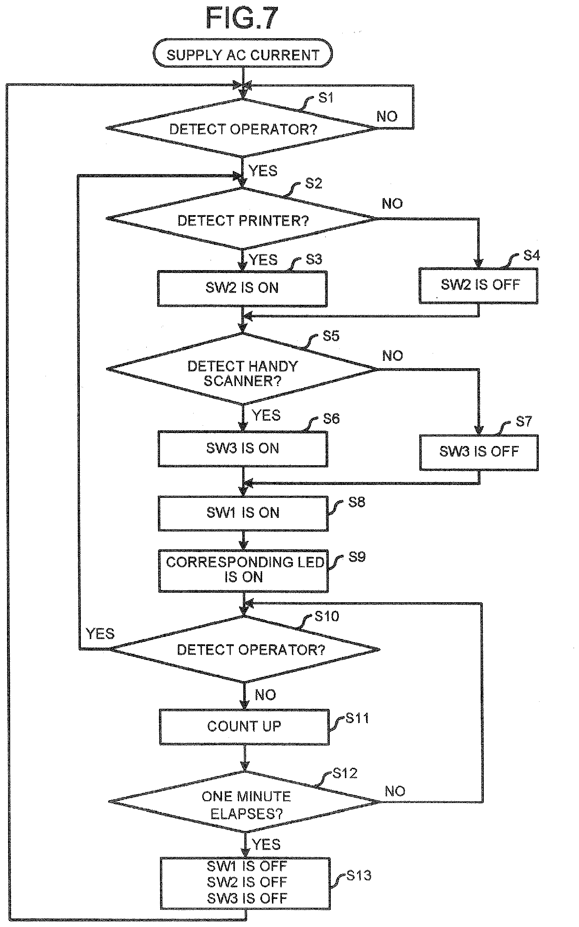

Fig. 7 is a flowchart illustrating an example of the operations of the power supply stand 10.

Firstly, the control section 101 detects whether or not there is an operator at the operation area (ACT S1). The control section 101 detects the presence or absence of the operator, for example, as follows.

In a case in which the infrared sensor is used as the human sensor 10-5, the human sensor 10-5 emits the infrared light to the operation area. The human sensor 10-5 senses the reflected light from the operation area, and monitors an electrical signal to which the reflected light is converted. Then, human sensor 10-5 outputs the detection signal (for example, the HIGH-level signal) to the control section 101 if the signal level of the electrical signal is greater than the specific threshold value. If the detection signal is input from the human sensor 10-5, the control section 101 determines that the operator is located at the operation area (Yes in ACT S1). On the other hand, if no detection signal is input from the human sensor 10-5 (for example, if the LOW-level signal state is kept), the control section 101 determines that the operator is not located at the operation area (No in ACT S1). If the No is taken in ACT S1, the control section 101 stands by until the detection signal is input.

If the Yes is taken in ACT S1, next, the control section 101 detects whether or not there is the printer 12 in the placement area A2 (ACT S2). Specifically, on the basis of the input signal level from the first device detection sensor 107, the control section 101 detects whether or not the printer 12 is placed in the placement area A2. In the present embodiment, it is described first that the printer 12 is placed in the placement area A2 in advance. Thus, as the detection signal (for example, the HIGH-level signal) is input from the first device detection sensor 107, the control section 101 determines that the printer 12 is placed in the placement area A2 (Yes in ACT S2) .

If the Yes is taken in ACT S2, the control section 101 outputs the "ON" signal to the changeover switch SW2 (ACT S3) . With this operation, if the remaining changeover switch SW1 becomes an "ON" state, the current flows to the primary coil L1-2.

On the other hand, if the No is taken in ACT S2, the control section 101 outputs the "OFF" signal to the changeover switch SW2 (ACT S4). With this operation, no current flows to the primary coil L1-2.

Following ACT S3 and ACT S4, the control section 101 detects whether or not there is the handy scanner 13 in the placement area A3 (ACT S5) . Specifically, the control section 101 detects whether or not the handy scanner 13 is placed in the placement area A3 on the basis of the input signal level from the second device detection sensor 108. It is also described first in the present embodiment that the handy scanner 13 is placed in the placement area A3 in advance. Thus, as the detection signal (for example, the HIGH-level signal) is input from the second device detection sensor 108, the control section 101 determines that the handy scanner 13 is placed in the placement area A3 (Yes in ACT S5).

If the Yes is taken in ACT S5, the control section 101 outputs the "ON" signal to the changeover switch SW3 (ACT S6) . With this operation, if the remaining changeover switch SW1 becomes the "ON" state, the current flows to the primary coil L1-3.

On the other hand, if the No is taken in ACT S5, the control section 101 outputs the "OFF" signal to the changeover switch SW3 (ACT S7). With this operation, no current flows to the primary coil L1-3.

As the primary coil L1-1 is always connected with the AC section 104, the current always flows to the primary coil L1-1 if the changeover switch SW1 is in the "ON" state.

Next, the control section 101 outputs the "ON" signal to the changeover switch SW1 (ACT S8). With this operation, the power transmission line between the power control section 103 and the AC section 104 is closed, and the alternating current flows to the primary coil L1-1. Further, if the changeover switch SW2 is in an "ON" state, the alternating current also flows to the primary coil L1-2. If the changeover switch SW3 is in an "ON" state, the alternating current also flows to the primary coil L1-3. In the case of the present embodiment, as the changeover switch SW2, SW3 are both in the "ON" state, the alternating current flows to each of the primary coils L1-1, L1-2 and L1-3. Thus, the wireless power supply to the POS terminal 11, the printer 12 and the handy scanner 13 is started.

Next, the control section 101 outputs the "ON" signal to LEDs 10-1, 10-2 and 10-3 based on the combination of "ON" states of the changeover switches SW1, SW2 and SW3 (ACT S9). Specifically, in a case in which the changeover switch SW1 is in the "ON" state, the control section 101 outputs the "ON" signal to the LED 10-1 and outputs an "OFF" signal to the LEDs 10-2 and 10-3. In a case in which the changeover switches SW1 and SW2 are both in the "ON" state, the control section 101 outputs the "ON" signal to the LEDs 10-1 and 10-2 and outputs the "OFF" signal to the LED 10-3. In a case in which the changeover switches SW1 and SW3 are both in the "ON" state, the control section 101 outputs the "ON" signal to the LEDs 10-1 and 10-3 and outputs the "OFF" signal to the LED 10-2. In a case in which the changeover switches SW1, SW2 and SW3 are in the "ON" state, the control section 101 outputs the "ON" signal to the LEDs 10-1, 10-2 and 10-3. Further, in a case in which the changeover switches SW1, SW2 and SW3 are in the "OFF" state, the control section 101 outputs the "OFF" signal to the LEDs 10-1, 10-2 and 10-3.

Next, the control section 101 determines whether or not there is the operator at the operation area (ACT S10). The detection method is the same as that in ACT S1. Thus, the specific description is omitted.

If the Yes is taken in ACT S10, the control section 101 returns to the processing in ACT S2 and executes the operations from ACT S2.

In the operations of the second round from ACT S2, it is assumed, for example, that the printer 12 is moved to another location from the placement area A2 of the power supply stand 10 by the operator. In other words, the printer 12 is moved from the power supply area to the outside of the power supply area. In this case, no detection signal is output from the first device detection sensor 107. Thus, the No is taken in ACT S2, and the control section 101 outputs the "OFF" signal to the changeover switch SW2 to stop the power supply from the primary coil L1-2.

It is assumed that the handy scanner 13 is lifted up from the power supply stand 10 for use by the operator, which means that the handy scanner 13 is moved from the power supply area to the outside of the power supply area. In this case, no detection signal is output from the second device detection sensor 108. Thus, the No is taken in ACT S5, and the control section 101 outputs the "OFF" signal to the changeover switch SW3 to stop the power supply from the primary coil L1-3. In other words, the power supply to the placement area on the power supply stand where the electronic device 10 is placed is carried out, but the power supply to the placement area where no electronic device is placed is stopped properly.

Next, a case in which the No is taken in ACT S10 is described.

The case in which the No is taken in ACT S10 is that the operator leaves the operation area and thus the operator cannot be detected. In this case, the control section 101 counts an elapsed time for which the operator is not detected with the timer (ACT S11).

Subsequently, the control section 101 determines whether or not an accumulated or counted value of the elapsed time reaches one minute (ACT S12). In ACT S12, if the accumulated value of the elapsed time does not reach one minute (No in ACT S12), the control section 101 returns to the processing in ACT S10. On the other hand, in ACT S12, if the accumulated value of the elapsed time reaches one minute (Yes in ACT S12), the control section 101 outputs the "OFF" signal to all the changeover switches SW1, SW2 and SW3 (ACT S13). After the processing in ACT S13, the control section 101 returns to the processing in ACT S1.

There is also a case in which the operator temporarily leaves the operation area in the commodity transaction processing, and then returns to the operation area to restart the commodity transaction processing. In the present embodiment, a time for which the operator leaves the operation area temporarily is set to one minute, the power supply is maintained after the operator leaves the operation area until one minute elapses, and the commodity transaction processing can be continuously carried out. It is considered that the case in which one minute elapses refers to a case in which the operator terminates the commodity transaction processing and leaves the operation area. Therefore, if one minute elapses, the control section 101 stops the power supply. The elapsed time is set to one minute but the time may be set properly.

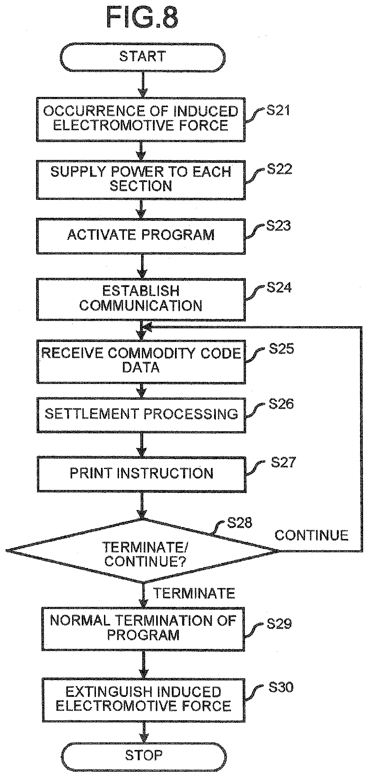

Fig. 8 is a flowchart illustrating an example of the operations of the POS terminal 11.

Firstly, the induced electromotive force occurs in the secondary coil L2-1 of the power receiving coil section 115 (ACT S21). Specifically, the power supply section 10 flows the alternating current to the primary coil L1-1 in the processing in ACT S8 of flowchart (refer to Fig. 7). With this operation, the induced electromotive force occurs in the secondary coil L2-1 through the electromagnetic induction action.

The power control section 116 supplies the power to each section of the POS terminal 11 on the basis of the induced electromotive force occurring in the power receiving coil section 115 (ACT S22).

The control section 114 activates various programs through the supply of the power source in the processing in ACT S22 (ACT S23) .

The control section 114 establishes a communication with the printer 12 and the handy scanner 13 (ACT S24). For example, the control section 114 sends a signal instructing the establishment of the communication with the printer 12 and the handy scanner 13 and establishes the communication through each response signal from the printer 12 and the handy scanner 13.

The control section 114 receives the commodity code data (ACT S25). Specifically, the control section 114 receives the commodity code data input from the operation section 111 or the commodity code data sent from the handy scanner 13 through the wireless communication section 113. Furthermore, the control section 114 extracts commodity data corresponding to a unit price of a commodity from a database according to the received commodity code data and displays the unit price of the commodity on the display section 112.

The control section 114 carries out a settlement processing (ACT S26). Specifically, the control section 114 calculates a total amount of commodities according to the commodity data corresponding to one transaction extracted in the processing in ACT S25 and displays the settlement amount for the customer on the display section 112. Further, the control section 114 displays a deposit amount from the customer and a change amount on the display section 112 to carry out the settlement processing of the commodities corresponding to one transaction.

Next, the control section 114 carries out a print instruction (ACT S27). Specifically, the control section 114 sends the print command to the printer 12 to instruct a printing. If the printer 12 responds to the print command, the control section 114 sends the print data to the printer 12 to enable the printer 12 to execute the print output.

Next, the control section 114 determines whether or not to carry out a shutdown processing (ACT S28). The control section 114 confirms the continuation or termination of the processing with the operator each time one transaction is terminated, and if there is the input indicating the continuation of the processing, returns to the processing in ACT S25 to carry out a next transaction processing.

On the other hand, in ACT S28, if there is the input indicating the termination of the processing, the control section 114 carries out the shutdown processing to terminate the program normally (ACT S29).

After the termination of the program, if the operator leaves the operation area, the power supply stand 10 detects that the operator leaves the operation area and stops the power supply after one minute elapses. Thus, in the POS terminal 11, the induced electromotive force is extinguished, and the power supply to each section is stopped (ACT S30).

In this way, the POS terminal 11 of the present embodiment inquires of the operator whether or not the transaction processing is continued or terminated after the termination of the settlement processing for one transaction. If the operator terminates the transaction processing, the POS terminal 11 enables the shutdown processing to be completed within one minute within which the power supply stand 10 stops the power supply.

The timing of the shutdown processing of the POS terminal 11 is not limited to this. For example, in each input processing requested to the operator from ACT S23 to ACT S27, the shutdown processing may be carried out in a case in which the input operation from the operator is not carried out for a certain time. This case refers to a case in which it is assumed that the operator leaves the operation area more than one minute during the operation period, and the shutdown processing is carried out, for example, as follows.

Taking a shutdown time in consideration, a determination time for stopping the power supply of the power supply stand 10 is extended from one minute to, for example, two minutes, and a determination time of the POS terminal 11 is set to, for example, 30 seconds. In a case in which a non-input time lasts for 30 seconds, the POS terminal 11 stores setting data and input data input till then in a hard disk drive and then carries out the shutdown processing. If the operator comes to the operation area again, the POS terminal 11 reads out the stored setting data and input data from the hard disk drive, and restarts the processing from the point at which the processing is interrupted. In a case in which the operator returns to the operation area before two minutes elapse, the terminated program is activated again because the power supply is still continued.

The POS terminal 11 which separately includes a sensor for detecting the operator in the operation area may carry out the shutdown processing in a case in which the output signal of the non-detection of the operator from the sensor lasts for, for example, 30 seconds. At this time, the determination time for stopping the power supply of the power supply stand 10 is set to, for example, two minutes.

Further, the human sensor 10-5 of the power supply stand 10 may detect a state in which the operator leaves the operation area. In this case, for example, the control section 101 sends a specific signal to the POS terminal 11 if the state in which the operator leaves the operation area lasts for 30 seconds. The POS terminal 11 takes the signal as a trigger to carry out the shutdown processing.

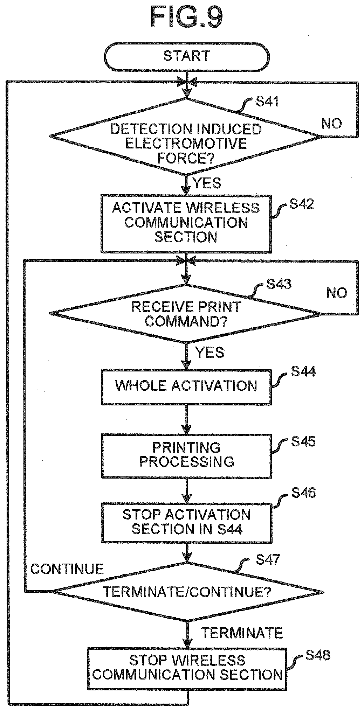

Fig. 9 is a flowchart illustrating an example of the operations of the printer 12.

Firstly, the printer 12 detects the occurrence of the induced electromotive force (ACT S41). Specifically, the power control section 128 monitors the voltage between both terminals of the secondary coil L2-2 to detect the occurrence of the induced electromotive force (ACT S41). If no induced electromotive force occurs, the power control section 128 continuously monitors the voltage until the induced electromotive force occurs (No in ACT S41).

If the induced electromotive force is detected (Yes in ACT S41), the printer 12 stands by in a state (energy saving mode) of activating the processing section relating to a communication processing (ACT S42). Specifically, the power control section 128 supplies power from the battery 126 to the control section 125 and the wireless communication section 123 relating to the communication processing. In this way, the power control section 128 is kept in advance in a state of enabling a communication processing function to be activated. If there is a request of establishing the communication from the POS terminal 11, the control section 125 and the wireless communication section 123 relating to the communication processing responds to the POS terminal 11 to establish the communication.

Subsequently, the printer 12 receives the print command (ACT S43) to activate the whole functions of the printer 12 (ACT S44) . Specifically, the control section 125 determines whether or not the print command from the POS terminal 11 is received by the wireless communication section 123. The control section 125 stands by until the print command is received (No in ACT S43). If the print command is received (Yes in ACT S43), the control section 125 outputs a control signal for enabling the supply of the power of the battery 126 to each section of the printer 12 to be started to the power control section 128. The control section 125 activates the remaining programs relating to the printing processing (ACT S44).

The printer 12 executes the printing processing according to the print command (ACT S45). Specifically, the control section 125 acquires the print data from the POS terminal 11 via the wireless communication section 123 if the print command is received. Then, the control section 125 controls the printing section 124 to print the print data on the receipt paper to discharge the printed receipt paper to the outside.

Subsequently, the printer 12 turns off part of the power source used to additionally activate the functions of the printer 12 in ACT S44 (ACT S46). Specifically, the control section 125 outputs the control signal for stopping the supply of the power of the battery 126 to the power control section 128. With this operation, the power control section 128 wholly stops the power supply to the processing sections other than the processing sections relating to the communication processing.

After that, the printer 12 determines whether or not all the power sources are turned off (ACT S47). Specifically, the POS terminal 11 confirms the continuation or termination of the processing with the operator each time one transaction is terminated. Thus, the control section 125 receives a signal indicating the continuation or termination of the processing and in a case in which the control section 125 determines the continuation of the processing according to the received signal, the printer 12 repeats the processing from the processing ACT S43.

On the other hand, in ACT S47, if receiving a signal indicating the termination of the processing, the control section 125 terminates the processing and stops the power supply from the battery 126 to the processing sections relating to the communication (ACT S48).

Afterwards, if the operator leaves the operation area, the power supply stand 10 detects the absence of the operator and stops the power supply after one minute elapses. Thus, in the printer 12, the induced electromotive force is extinguished, and the power supply from the battery 126 is stopped.

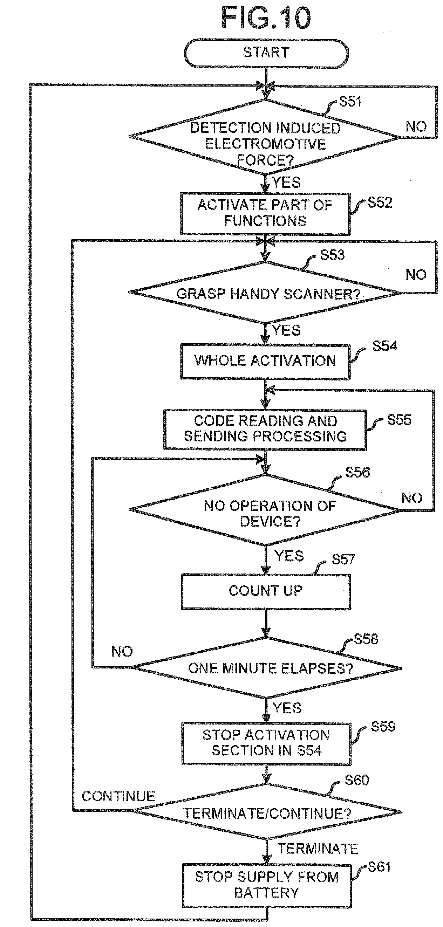

Fig. 10 is a flowchart illustrating an example of the operations of the handy scanner 13.

Firstly, the handy scanner 13 detects the occurrence of the induced electromotive force (ACT S51) . Specifically, the power control section 137 monitors the voltage between both terminals of the secondary coil L2-3 to detect the occurrence of the induced electromotive force. In a case in which no induced electromotive force occurs, the power control section 137 continues to monitor the voltage until the induced electromotive force occurs (No in ACT S51) . In the power supply stand 10, if the operator in the operation area is detected, the induced electromotive force occurs in the secondary coil L2-3 and the charge to the battery 135 is started.

If detecting the induced electromotive force (Yes in ACT S51), the handy scanner 13 stands by in a state (energy saving mode) in which a part of functions is being activated (ACT S52) . Specifically, the power control section 137 supplies the power from the battery 135 to the use-state detection sensor 133 to activate the part of the functions thereof in advance. In this way, the power control section 137 monitors the output from the use-state detection sensor 133. The power control section 137 detects a signal indicating the activation of the handy scanner 13 output when the operator grasps the handy scanner 13. Further, the power control section 137 supplies the power from the battery 135 to the processing section relating to the wireless communication with POS terminal 11 to enable a wireless communication function to be activated in advance. With these operations, if there is a communication connection request from the POS terminal 11, the processing section relating to the wireless communication establishes the wireless communication with POS terminal 11 in response to the communication connection request.

Subsequently, the handy scanner 13 determines whether or not the scanner itself is in the use state (ACT S53). If the handy scanner 13 is in the use state, the power control section 137 activates the whole functions of the handy scanner 13 (ACT S54). Specifically, the power control section 137 monitors the input signal from the use-state detection sensor 133 (ACT S53) . If the input signal is a signal for instructing the activation of the handy scanner 13 (Yes in ACT S53), the power control section 137 activates the whole functions of the handy scanner 13. In other words, the power control section 137 supplies the power of the battery 135 to the remaining sections of the handy scanner 13 to activate the whole functions of the handy scanner 13 (ACT S54). The use-state detection sensor 133 outputs the signal for instructing the activation of the handy scanner 13 to the power control section 137 when the operator takes the handy scanner 13 by hand. In a case in which there is no input signal from the use-state detection sensor 133, the power control section 137 monitors the input signal of the use-state detection sensor 133 until the input signal is received (No in ACT S53).

In ACT S55, the handy scanner 13 carries out a reading and sending processing of the commodity barcode. Specifically, the operator irradiates a commodity tag with the infrared light of the handy scanner 13. In this way, the commodity barcode printed on the commodity tag is read through the scanning section 132. Then, the control section 134 encodes the read commodity barcode to the commodity code data and sends the commodity code data to the POS terminal 11 through the wireless communication section 131.

The handy scanner 13, then, determines the operations of the scanner itself (ACT S56) . Specifically, the control section 134 monitors the input signal from the use-state detection sensor 133. In a case in which the input signal is a signal for instructing the activation of the handy scanner 13 (No in ACT S56), the handy scanner 13 repeatedly carries out the processing in ACT S55.

If the Yes is taken in ACT S56, the control section 134 counts an elapsed time with the timer (ACT S57).

Subsequently, the handy scanner 13 determines whether or not an accumulated or counted value of the elapsed time reaches one minute (ACT S58). Specifically, the control section 134 carries out the determination. In the processing in ACT S58, if the accumulated value of the elapsed time does not reach one minute (No in ACT S58), the handy scanner 13 returns to the processing in ACT S56. On the other hand, in the processing in ACT S58, if the accumulated value of the elapsed time reaches one minute (Yes in ACT S58), the control section 134 outputs a signal indicating the energy saving mode to the power control section 137 (ACT S59). In this way, the power control section 137 supplies the power of the battery 135 only to the use-state detection sensor 133 and the processing section relating to the wireless communication with the POS terminal 11 and stops the supply of the power to the remaining sections such as the scanning section 132 and the like.

The handy scanner 13, then, determines whether or not all the power sources are turned off (ACT S60). Specifically, the POS terminal 11 confirms the continuation or termination of the processing with the operator each time the one transaction is terminated. Thus, in the handy scanner 13, the control section 134 receives a signal indicating the continuation or termination of the processing. If receiving the signal indicating the continuation of the processing, the handy scanner 13 repeats the processing subsequent to the processing in S53.

On the other hand, in the processing in ACT S60, if receiving the signal indicating termination of the processing, the handy scanner 13 wholly stops the power supply from the battery 135 (ACT S61).

Afterwards, if the operator leaves the operation area, the power supply stand 10 detects the absence of the operator in the operation area and stops the power supply after one minute elapses. Thus, in the handy scanner 13, the induced electromotive force is extinguished, and the power supply from the battery 135 is stopped.

As stated above, in the processing in ACT S56, the operations of the handy scanner 13 are determined. If the handy scanner 13 is not operated (the handy scanner 13 is stopped), it is determined whether or not the state is continued for one minute. However, the time (one minute, in the present embodiment) is an example and may be changed properly.

In the present embodiment, one type of power supply stand which is flatly or horizontally placed on a table is shown as an example of the wireless power supply device. However, the wireless power supply device is not limited to this type. The wireless power supply device may be any form as long as it can supply the power to the electronic device wirelessly. For example, the type of power supply stand may be modified in such a manner that it is vertically arranged on a table to supply the power from the side surface of the electronic device.

In the present embodiment, it is exemplified that the POS main body device is constituted with the keyboard and the display section which are integrally composed, and the printer and the handy scanner are the peripheral devices. However, the constitution of the wireless POS system is not limited to the combination. The keyboard and the display section may be regarded as the peripheral devices of the POS main body device. Further, the POS main body device is constituted with the printer and the scanner. Furthermore, it is modified in such a manner that the battery is loaded in the POS main body device and the POS main body device is driven by the battery. In this case, in a case in which the battery of the POS main body device is fully charged, the power supply from the power supply stand can be stopped.

In the present embodiment, the device detection sensor can distinctively detect a state in which the electronic device is being placed in the placement area and a state in which the electronic device is lifted up from the placement area. In other words, the upper surface of the power supply stand is set as the power supply area, and the upper area above the power supply stand is set as the outside of the power supply area. However, this is only an example of the boundary of the power supply area and the outside of the power supply area, and the power supply area is not limited to such range described above. An area which is imaginary created with a specific height from the upper surface of the power supply stand may be set as the power supply area. The power supply area may be changed properly through the proper selection of the device detection sensor and the adjustment of the threshold value of the device detection sensor.

Further, in the present embodiment, the device detection sensor arranged in the power supply stand detects whether or not the electronic device is in the power supply area. However, the device detection sensor may be arranged at each electronic device. In this case, the output signal of the device detection sensor is sent from each electronic device to the power supply stand. The power supply stand receives the sent signal to control the changeover switch.

As stated above, in the wireless power supply system and the wireless power supply device of the present embodiment, the power supply stand carries out the wireless power supply to the electronic device used by the operator in a case in which the operator is located at the operation area. If the operator leaves the operation area, the power supply stand stops the wireless power supply. Thus, by suppressing the wasteful power supply from the power supply stand at the time the electronic device is not used, the transmission loss through the wireless power supply for the time can be prevented.

Even in a case in which the operator is located at the operation area, each electronic device operates in the energy saving mode if the individual electronic device is not used. Thus, it is possible to charge the battery to the maximum level without wastefully consuming the electric power transmitted wirelessly from the power supply stand. Therefore, as the battery is fully charged in a shorter time, as long as a signal indicating a full charge is sent from the electronic device to the power supply stand, the transmission of the electric power from the power supply stand can be quickly stopped in response to the sent signal.

Further, among the electronic devices, there is an electronic device like the handy scanner that is placed on the power supply stand or grasped to lift it up in use. In the state in which the electronic device is lifted up, the electric power transmitted from the power supply stand cannot be taken out mostly or fully by the electronic device. In the present embodiment, the wireless power supply from the power supply stand is stopped in the state in which the electronic device is lifted up, and thus, the wasteful power supply from the power supply stand for the time the electronic device is lifted up is also suppressed.

In this way, in the wireless power supply system and the wireless power supply device of the present embodiment, by reducing the wasteful transmission of the electric power, the power loss of the transmission can be reduced.

In the foregoing embodiments and modifications, the structures of the wireless power supply system and the wireless power supply device are described. These embodiments and modifications have been presented by way of example only, and are not intended to limit the scope of the invention. Indeed, the novel embodiments and modifications described herein may be embodied in a variety of other forms; furthermore, various omissions, substitutions and changes in the form of the embodiments and modifications described herein may be made without departing from the framework of the invention. The accompanying claims are intended to cover such forms or modifications as would fall within the scope of the invention.

## Claims

1. A wireless power supply system, for supplying power to an electronic device (13) comprising:
a power supply section (10) configured to carry out a wireless power supply to the electronic device;
a detection section (10-5) configured to detect an operator who operates the electronic device; and
a power supply control section (101) configured to start the wireless power supply to the electronic device by the power supply section if the operator is detected by the detection section or stop the wireless power supply to the electronic device by the power supply section if the operator is not detected by the detection section, **characterized in that**
the detection section (10-5) is an infrared sensor or an ultrasonic sensor.

2. The wireless power supply system according to claim 1, further comprising :
a device detection section (107, 108, 133) configured to detect that the electronic device is moved from a power supply area for receiving the wireless power supply to the outside of the power supply area, wherein
the electronic device charges a built-in battery through the wireless power supply, in a state of a power-off or an energy saving mode, until the device detection section detects that the electronic device is moved to the outside of the power supply area.

3. The wireless power supply system according to claim 2, wherein
the power supply control section stops, if the device detection section detects that the electronic device is moved to the outside of the power supply area, the wireless power supply from the power supply section to the electronic device whose movement to the outside of the power supply area is detected.

4. A wireless power supply device comprising the system according to claim 1, further comprising:
a housing, in which the power supply section is arranged, configured to receive the electronic device to carry out the wireless power supply to the electronic device by the power supply section.

5. The wireless power supply device according to claim 4, further comprising
a device detection section configured to detect that the electronic device is moved to the inside or outside of a power supply area serving as an area for enabling the electronic device to receive the wireless power supply, wherein
the power supply control section stops, if the device detection section detects that the electronic device is moved to the outside of the power supply area, the wireless power supply to the electronic device until the device detection section detects that the electronic device is moved to the inside of the power supply area.

6. A point of sale system comprising a point of sales main body (10), an electronic device (13) and-the wireless power supply system (11) according to any one of claims 1 to 3, or the wireless power supply device according to claim 4 or 5.

7. The point of sale system according to claim 6, the electronic device (13) further comprising a built-in battery, a use-state detection section (133) for detecting a use state of the electronic devise by the operator and a power control section (137) for controlling power supply from the built-in battery to the electronic device,
wherein the use-state detection section (133) is configured to output a signal for instructing the activation of the electronic device to the power control section (137) if an output value from the detecting section (133) is greater than a specific threshold value.

8. The point of sale system according to claim 7, wherein the power control section (137) is configured to control power supply from the built-in battery (135) to the electronic device (13) to enable a wireless communication with the point of sales main body (10).

## Patentansprüche

1. Kabelloses Energieversorgungssystem zum Liefern von Energie an eine elektronische Vorrichtung (13) umfassend:
einen Energieversorgungsabschnitt (10), der zum Durchführen einer kabellosen Energieversorgung zu der elektronischen Vorrichtung ausgebildet ist;
einen Detektionsabschnitt (10-5), der zum Detektieren eines Benutzers, welcher die elektronische Vorrichtung benutzt, ausgebildet ist; und
einen Energieversorgungssteuerabschnitt (101), der ausgebildet ist, um die kabellose Energieversorgung mittels des Energieversorgungsabschnitts zu der elektronischen Vorrichtung zu starten, falls der Benutzer durch den Detektionsabschnitt detektiert wird, oder, um die kabellose Energieversorgung mittels des Energieversorgungsabschnitts zu der elektronischen Vorrichtung zu stoppen, falls der Benutzer durch den Detektionsabschnitt nicht detektiert wird,
**dadurch gekennzeichnet, dass**
der Detektionsabschnitt (10-5) ein Infrarotsensor oder einen Ultraschallsensor ist.

2. Kabelloses Energieversorgungssystem nach Anspruch 1, weiter umfassend:
einen Vorrichtungsdetektionsabschnitt (107, 108, 133), der ausgebildet ist, um zu Detektieren, dass die elektronische Vorrichtung von einem Energieversorgungsbereich zum Empfangen der kabellosen Energieversorgung auf die Außenseite des Energieversorgungsbereichs bewegt wird, wobei
die elektronische Vorrichtung durch die kabellose Energieversorgung eine integrierte Batterie lädt, in einem Zustand eines stromlosen oder eines Energiespar-Modus, bis der Vorrichtungsdetektionsabschnitt detektiert, dass die elektronische Vorrichtung auf die Außenseite des Energieversorgungsreichs bewegt wird.

3. Kabelloses Energieversorgungssystem nach Anspruch 2, wobei
der Energieversorgungssteuerabschnitt die kabellose Energieversorgung von dem Energieversorgungsabschnitt zu der elektronischen Vorrichtung, deren Bewegung auf die Außenseite der Energieversorgung Bereich detektiert wird, stoppt, falls der Vorrichtungsdetektionsabschnitt detektiert, dass die elektronische Vorrichtung auf die Außenseite der Energieversorgungsbereichs bewegt wird.

4. Kabellose Energieversorgungsvorrichtung umfassend das System nach Anspruch 1, weiter umfassend:
ein Gehäuse, in dem der Energieversorgungsabschnitt angeordnet ist, welches zum Aufnehmen der elektronischen Vorrichtung ausgebildet ist, um die kabellose Energieversorgung durch den Energieversorgungsabschnitt zu der elektronischen Vorrichtung durchzuführen.

5. Kabellose Energieversorgungsvorrichtung nach Anspruch 4, weiter umfassend
einen Vorrichtungsdetektionsabschnitt, der ausgebildet ist, um zu Detektieren, dass die elektronische Vorrichtung auf die Außenseite oder Innenseite eines Energieversorgungsbereichs, welcher als ein Bereich zum Ermöglichen des Empfangens der kabellosen Energieversorgung durch die elektronische Vorrichtung dient, ausgebildet ist, wobei
der Energieversorgungssteuerabschnitt die kabellose Energieversorgung zu der elektronischen Vorrichtung stoppt, falls der Vorrichtungsdetektionsabschnitt detektiert, dass die elektronische Vorrichtung auf die Außenseite des Energieversorgungsbereichs bewegt wird, bis der Vorrichtungsdetektionsabschnitt detektiert, dass die elektronische Vorrichtung auf die Innenseite des Energieversorgungsbereichs bewegt wird.

6. Kassensystem umfassend einen Kassensystemhauptkörper (10), eine elektronische Vorrichtung (13) und das kabellose Energieversorgungssystem (11) nach einem der Ansprüche 1 bis 3, oder die kabellose Energieversorgungsvorrichtung nach einem der Ansprüche 4 oder 5.

7. Kassensystem nach Anspruch 6, die elektronische Vorrichtung (13) umfasst weiter eine integrierte Batterie, einen Benutzungsstatusdetektionsabschnitt (133) zum Detektieren eines Benutzungsstatus der elektronischen Vorrichtung durch den Benutzer und einen Energiesteuerabschnitt (137) zum Steuern der Energieversorgung von der integrierten Batterie zu der elektronischen Vorrichtung,
wobei der Benutzungsstatusdetektionsabschnitt (133) ausgebildet ist, um ein Signal zur Instruktion der Aktivierung der elektronischen Vorrichtung an den Energiesteuerabschnitt (137) auszugeben, falls ein Ausgabewert des Detektionsabschnitts (133) größer als ein bestimmter Schwellwert ist.

8. Kassensystem nach Anspruch 7, wobei der Energiesteuerabschnitt (137) ausgebildet ist, um die Energieversorgung von der integrierten Batterie (135) zu der elektronischen Vorrichtung (13) zu steuern, um eine kabellose Kommunikation mit dem Kassenhauptkörper (10) zu ermöglichen.

## Revendications

1. Ensemble d'alimentation en énergie sans fil, destiné à délivrer de l'énergie à un dispositif électronique (13) comprenant :
une section d'alimentation en énergie (10) configurée de manière assurer une alimentation en énergie sans fil au dispositif électronique ;
une section de détection (10-5) configurée de manière à détecter un opérateur qui utilise le dispositif électronique ; et
une section de commande d'alimentation en énergie (101) configurée de manière à démarrer l'alimentation en énergie sans fil du dispositif électronique par la section d'alimentation en énergie si l'opérateur est détecté par la section de détection ou à arrêter l'alimentation en énergie sans fil du dispositif électronique par la section d'alimentation en énergie si l'opérateur n'est pas détecté par la section de détection, **caractérisé en ce que**
la section de détection (10-5) est un capteur à infrarouge ou un capteur à ultrasons.

2. Ensemble d'alimentation en énergie sans fil selon la revendication 1, comprenant, en outre :
une section de détection de dispositif (107, 108, 133) configurée de manière à détecter que le dispositif électronique est déplacé à partir d'une zone d'alimentation en énergie permettant de recevoir l'alimentation en énergie sans fil vers l'extérieur de la zone d'alimentation en énergie, dans lequel
le dispositif électronique charge une batterie intégrée par l'intermédiaire de l'alimentation en énergie sans fil, dans un état hors tension ou un mode d'économie d'énergie, jusqu'à ce que la section de détection de dispositif détecte que le dispositif électronique est déplacé vers l'extérieur de la zone d'alimentation en énergie.

3. Ensemble d'alimentation en énergie sans fil selon la revendication 2, dans lequel
la section de commande d'alimentation en énergie arrête, si la section de détection de dispositif détecte que le dispositif électronique est déplacé vers l'extérieur de la zone d'alimentation en énergie, l'alimentation en énergie sans fil de la section d'alimentation en énergie vers le dispositif électronique dont le déplacement vers l'extérieur de la zone d'alimentation en énergie est détecté.

4. Dispositif d'alimentation en énergie sans fil comprenant l'ensemble selon la revendication 1, comprenant, en outre :
un boîtier, dans lequel la section d'alimentation en énergie est agencée, configuré de manière à recevoir le dispositif électronique destiné à assurer l'alimentation en énergie sans fil du dispositif électronique par la section d'alimentation en énergie.

5. Dispositif d'alimentation en énergie sans fil selon la revendication 4, comprenant, en outre :
une section de détection de dispositif configurée de manière à détecter que le dispositif électronique est déplacé vers l'intérieur ou l'extérieur d'une zone d'alimentation en énergie servant de zone permettant au dispositif électronique de recevoir l'alimentation en énergie sans fil, dans lequel
la section de commande d'alimentation en énergie arrête, si la section de détection de dispositif détecte que le dispositif électronique est déplacé vers l'extérieur de la zone d'alimentation en énergie, l'alimentation en énergie sans fil du dispositif électronique jusqu'à ce que la section de détection de dispositif détecte que le dispositif électronique est déplacé vers l'intérieur de la zone d'alimentation en énergie.

6. Dispositif formant point de vente comprenant un corps principal de point de vente (10), un dispositif électronique (13) et le dispositif d'alimentation en énergie sans fil (11) selon l'une quelconque des revendications 1 à 3, ou le dispositif d'alimentation en énergie sans fil selon la revendication 4 ou 5.

7. Dispositif formant point de vente selon la revendication 6, le dispositif électronique (13) comprenant, en outre, une batterie intégrée, une section de détection d'état d'utilisation (133) destinée à détecter un état d'utilisation du dispositif électronique par l'opérateur et une section de commande d'énergie (137) destinée à commander l'alimentation en énergie à partir de la batterie intégrée du dispositif électronique,
dans lequel la section de détection d'état d'utilisation (133) est configurée de manière à délivrer un signal afin d'instruire l'activation du dispositif électronique vers la section de commande d'énergie (137) si une valeur de sortie de la section de détection (133) est supérieure à une valeur de seuil spécifique.

8. Dispositif formant point de vente selon la revendication 7, dans lequel la section de commande d'énergie (137) est configurée de manière à commander l'alimentation en énergie à partir de la batterie intégrée (135) vers le dispositif électronique (13) afin de permettre une communication sans fil avec le corps principal de point de vente (10).
